# FASCICULE DE BREVET EUROPEEN

(11) **EP 3 055 185 B1**
(45) Date de publication et mention de la délivrance du brevet: **24.05.2017**
(21) Numéro de dépôt: 14790241.5
(22) Date de dépôt: 10.10.2014
(51) Int. Cl.: B62D 1/184

(54) **SYSTÈME DE RÉGLAGE DE COLONNE DE DIRECTION**
SYSTEM ZUR EINSTELLUNG EINER LENKSÄULE
SYSTEM FOR ADJUSTING A STEERING COLUMN

(30) Priorité: 10.10.2013 FR 1359855
(43) Date de publication de la demande: 17.08.2016
(73) Titulaire: Renault S.A.S., 92100 Boulogne-Billancourt (FR)
(72) Inventeur: MENCARELLI, Franck, F-78610 Le Perray en Yvelines (FR)
(86) Numéro de dépôt international: PCT/FR2014/052571
(87) Numéro de publication internationale: WO 2015/052449

(56) Documents cités:
- DE-A1- 2 054 116

## Description

### Domaine technique de l'invention

La présente invention concerne une colonne de direction de véhicule automobile.

L'invention concerne plus particulièrement un système de réglage en hauteur et en profondeur de la dite colonne de direction.

### Etat de la technique

Dans un souci d'ergonomie, les véhicules automobiles comprennent des systèmes de plus en plus complexes pour s'adapter aux besoins des conducteurs. Des perfectionnements sont ainsi ajoutés nécessitant des sources d'énergie électrique ou des mécanismes compliqués. Plusieurs mécanismes permettant les réglages de ladite colonne de direction en hauteur et en profondeur existent mais ils sont sensiblement complexes, lourds et difficiles à mettre en place dans le véhicule.

La colonne de direction comporte un élément tubulaire monté mobile en rotation autour de son axe longitudinal et relié à une extrémité basse dirigée vers le châssis du véhicule automobile à un système de direction et à une extrémité haute diamétralement opposée tournée vers l'habitacle du véhicule à un volant de direction. Le volant peut alors grâce à des mécanismes de réglage être rapproché ou éloigné du conducteur et/ou relevé ou abaissé selon la taille dudit conducteur. Les déplacements du volant sont les conséquences des déplacements de l'élément tubulaire de ladite colonne de direction.

La publication FR2958614-A1 divulgue un mécanisme de réglage de colonne de direction de véhicule qui comporte un premier tube cylindrique en position basse et un second tube cylindrique adapté à coulisser sur le premier tube selon la direction longitudinale dudit tube adaptés à autoriser un réglage en profondeur du volant, le mécanisme de réglage comprenant un système de blocage comportant une première bride de fixation supérieure, une seconde bride de fixation inférieure solidaire du second tube adaptés à autoriser un réglage en hauteur du volant, ainsi qu'un système de verrouillage. Les nombreux composants du mécanisme de réglage participent à la complexité dudit mécanisme.

Cependant, les différentes positions de réglage de la colonne de direction ne sont pas toutes nécessaires et ne sont pas modifiées de façon fréquente. Ainsi une étude d'ergonomie a mis en avant qu'une majorité de conducteurs désire bénéficier d'un réglage du volant et donc de la colonne de direction dans une plage réduite de positions du volant de direction. Il a été ainsi déterminé que les positions de réglage en hauteur et profondeur du volant sont situées sur une courbe comprenant un arc de cercle, sensiblement un quart de cercle. De ce fait, il est intéressant de disposer d'un mécanisme de réglage qui permet de régler la colonne de direction en hauteur et en profondeur selon une plage réduite de déplacement adaptée aux besoins des conducteurs, ledit mécanisme étant simple et facile pour la fabrication et la mise en oeuvre et donc peu couteux.

La publication DE2054116-A1 divulgue un système de réglage de colonne de direction de véhicule automobile comportant un dispositif de réglage en position de ladite colonne de direction avec un déplacement longitudinal présentant une douille porteuse entourant la colonne, ladite douille étant entourée par un organe de blocage relié à une structure de caisse à l'aide de leviers pivotants.

La publication WO201069448-A1 divulgue un mécanisme de réglage de colonne de direction permettant un réglage en position de ladite colonne selon une plage réduite. Ledit mécanisme cependant comporte un élément de contrôle entourant la colonne et présentant un premier et un deuxième doigt s'étendant transversalement par rapport à la direction longitudinale de la colonne, chacun des doigts traversant une ouverture disposée dans un élément de contrôle fixé à un élément d'une traverse de planche de bord du véhicule et chacune des ouvertures étant adaptée pour diriger le doigt dans son déplacement selon l'axe longitudinal suivant une trajectoire prédéterminée. Le mécanisme présente un système de blocage coopérant avec un doigt.

Un inconvénient de ce mécanisme est que le système de blocage est susceptible de se déplacer longitudinalement avec ledit doigt et peut donc gêner le conducteur du véhicule.

Un inconvénient de ce mécanisme est que pour assurer le réglage en hauteur, le système de blocage doit être adapté à se déplacer en hauteur et l'environnement autour dudit système doit permettre son déplacement, ce qui réduit d'autant l'espace disponible autour de la colonne de direction.

Un autre inconvénient de ce mécanisme est l'ensemble des pièces constituant le mécanisme et pouvant augmenter le coût dudit mécanisme.

### Bref résumé de l'invention

Un but de l'invention est de pallier ces inconvénients et l'invention a pour objet un système de réglage de colonne de direction de véhicule automobile autorisant un réglage de ladite colonne en hauteur et en profondeur selon une plage réduite de déplacement de la colonne et ayant un impact minimal sur l'espace entourant ledit système.

L'objet de l'invention est plus particulièrement caractérisé en ce que le système de réglage de colonne de direction de véhicule automobile disposé en dessous d'une planche de bord comportant :
- une colonne de direction comportant un tube cylindrique portant à une extrémité haute un volant de direction,
- un dispositif de contrôle du déplacement du tube de la colonne autorisant le déplacement de l'extrémité basse dudit tube colonne selon une trajectoire définie dans un plan,
- un dispositif de blocage en position du tube de colonne,
- un système de guidage du tube de colonne autorisant le coulissement dudit tube selon l'axe longitudinal du tube,
le système de guidage est apte à pivoter autour d'un axe de guidage transversal au plan de la trajectoire et fixé solidaire d'un élément de la planche de bord du véhicule.

Avantageusement, le tube cylindrique est apte à coulisser au travers du système de guidage et autorise donc un réglage en profondeur du volant de direction. Il est également apte à pivoter avec le système de guidage autour d'un axe transversal au plan de la trajectoire. Ce déplacement permet un réglage en hauteur du volant de direction disposé à l'extrémité haute du tube de colonne. L'axe de guidage est fixé solidaire d'un élément de la planche de bord du véhicule ce qui permet de limiter l'espace autour de la colonne de direction nécessaire pour les réglages en hauteur du volant.

Selon d'autres caractéristiques de l'invention,
- le système de guidage du tube est adapté à entourer le tube de colonne

De manière avantageuse, le système de guidage est apte à contrôler les déplacements du tube de colonne de direction dans le sens longitudinal et en hauteur.
- le système de guidage est adapté à être comprimé pour bloquer le tube de colonne lors du verrouillage en position de la colonne de direction.

Avantageusement, le système de guidage est adapté à serrer le tube de colonne lors du verrouillage du dispositif de réglage de colonne de direction. Le blocage est effectué par un serrage des mâchoires du dispositif de blocage sur le système de guidage pour enserrer la colonne de direction rendant simple le fonctionnement du dispositif de blocage.
- le système de guidage entoure le tube de colonne en sa partie médiane.

De manière avantageuse, le système de guidage entoure le tube de colonne sensiblement en son milieu ce qui permet une plus grande amplitude de réglage.
- le dispositif de blocage est adapté à bloquer le tube de colonne en rotation autour de l'axe de guidage dans une position angulaire donnée.

De manière avantageuse, le dispositif de blocage est adapté à bloquer le tube de colonne dans une position angulaire donnée autour de l'axe de guidage fixé solidaire d'un élément de la planche de bord. Le volume du dispositif de blocage est donc minimisé.
- le dispositif de contrôle est apte à rattacher l'extrémité basse du tube de colonne à un élément de la planche de bord
- le dispositif de contrôle est apte à contrôler le déplacement de l'extrémité inférieure du tube de colonne selon un arc de cercle.

De manière avantageuse, le dispositif de contrôle chargé de contrôler la trajectoire du déplacement du tube de colonne est disposé à l'extrémité basse dudit tube de colonne et n'est pas susceptible de gêner le conducteur.

Le volant de direction est disposé à l'extrémité opposée de l'extrémité basse du tube de colonne dont le déplacement est contrôlé par le dispositif de contrôle, le tube de colonne étant apte à pivoter autour d'un axe parallèle à l'axe transversal au plan de la trajectoire et disposé entre les deux extrémités du tube de colonne. Ladite extrémité basse est donc conformée à se déplacer selon un arc de cercle, ce qui entraîne du côté opposé un déplacement du volant de direction selon un arc de cercle en sens opposé.
- le dispositif de contrôle est relié à un élément de la planche de bord du véhicule par un système de fixation.

Avantageusement, le dispositif de contrôle est rattaché à un élément de la planche de bord par un système de fixation de manière simple.
- le dispositif de contrôle est adapté à coulisser sur l'élément de la planche de bord selon un axe parallèle à l'axe longitudinal du véhicule.

De manière avantageuse, le système de fixation autorise des déplacements supplémentaires de la colonne de direction, de manière préférentielle selon l'axe longitudinal.

### Brève description des figures

La figure 1 est une vue en perspective de la colonne de direction avec le système de réglage selon l'invention.
La figure 2 est une vue transversale du système de guidage.
La figure 3 est une vue en perspective du système de contrôle.
La figure 4 est une vue de coupe transversale de l'extrémité du tube de colonne selon le plan AA.

### Description détaillée des figures

Les descriptions qui suivent se réfèrent à l'axe longitudinal X du tube de colonne de direction. Les parties basse et haute d'un élément sont relatives à un axe orthogonal au plan du véhicule lorsque ledit élément est disposé dans le véhicule en état de fonctionnement. On désigne par axe du véhicule L un axe horizontal reliant la partie médiane de l'avant du véhicule à la partie médiane arrière du véhicule. De même on appelle axe transversal T du véhicule un axe parallèle à l'un des axes des essieux de roues du véhicule automobile.

Afin de faciliter la compréhension de la description de l'invention, les mêmes éléments apparaissant dans des figures différentes gardent les mêmes références.

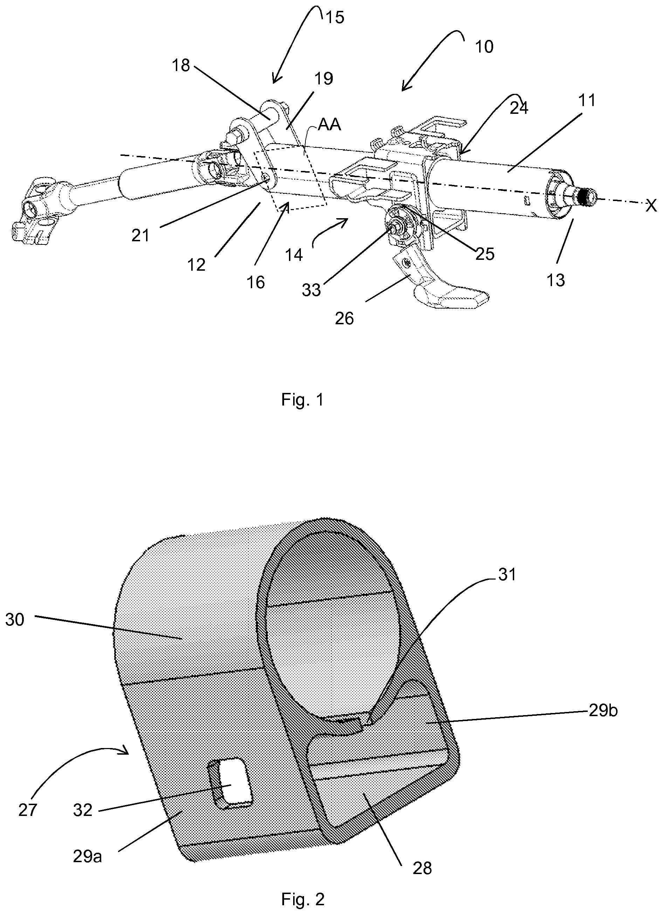

Selon la figure 1, une colonne de direction 10 comprend un élément tubulaire de colonne 11 relié à une extrémité basse 12 de manière élastique à un système de direction fixé au châssis du véhicule automobile (non représentés) et présentant une extrémité haute 13 adaptée à recevoir un volant de direction du véhicule (non représenté). On entend par « de manière élastique », le fait que le tube de colonne peut coulisser selon son axe longitudinal entre une position basse quand l'extrémité basse 16 dudit tube est le plus proche du châssis du véhicule et une position haute quand la colonne de direction est tirée le plus possible vers l'intérieur de l'habitacle du véhicule en direction du conducteur tout en restant relié au système de direction du véhicule.

Selon l'invention, sur la figure 1, le système de réglage de colonne de direction comprend un dispositif de blocage 14 entourant le tube de colonne 11 sensiblement en sa partie médiane et un dispositif de contrôle 15 reliant l'extrémité basse 16 du tube de colonne 11 à un élément de planche du véhicule (non représenté).

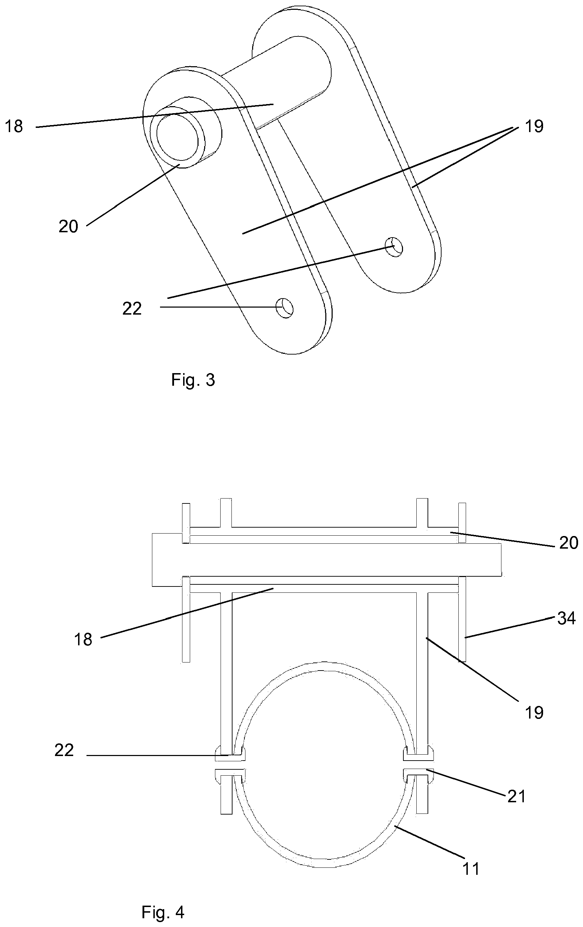

Selon les figures 3 et 4, de manière préférentielle, le dispositif de contrôle 15 comprend deux bras de contrôle 19 sensiblement plan et parallèles séparés par un tube cylindrique de contrôle 18 prolongé à ses deux extrémités par un doigt tubulaire 20 traversant chacun des bras à une extrémité haute, la longueur du tube de contrôle 18 étant sensiblement égale au diamètre du tube de colonne 11. Lesdits doigts tubulaires 20 sont aptes à être fixés à un élément 34 de la planche de bord du véhicule. Les deux bras de contrôle 19 sont ainsi adaptés à pivoter autour de l'axe de contrôle 18. Lesdits bras 19 tiennent par leur extrémité basse opposée l'extrémité basse 16 du tube de colonne 11.

Selon un mode de réalisation présenté en figure 4, le tube de colonne 11 présente sur sa surface cylindrique extérieure deux doigts radiaux 21 qui sont engagés dans une ouverture 22 disposée dans l'extrémité basse des bras de contrôle 19.

L'extrémité basse 16 du tube de colonne 11 est ainsi apte à se déplacer selon au moins un arc de cercle de façon préférentielle depuis le point le plus bas sur un quart de cercle dans le sens trigonométrique.

Le dispositif de blocage 14 comprend un système de guidage 24 disposé entre deux mâchoires 25 commandées par un levier de commande 26 pour se rapprocher l'une de l'autre en position de verrouillage. Le dispositif de blocage est monté avec la colonne de direction de telle façon qu'il est disposé sensiblement autour de la partie médiane du tube de colonne 11.

Selon les figures 1 et 2, le système de guidage 24 comporte de manière préférentielle une plaque 27 sensiblement rectangulaire pliée deux fois de façon orthogonale parallèlement à la largeur de la plaque pour présenter une paroi inférieure 28 comprise entre deux parois latérales 29a, 29b orthogonales en vis-à-vis l'une de l'autre et sensiblement identiques. Lesdites parois latérales sont chacune fixées à un tube cylindrique de guidage 30 selon une arête longitudinale dudit tube qui comprend une coupure longitudinale 31 comprise entre les dites parois latérales en regard avec la paroi inférieure 28. Le diamètre intérieur dudit tube de guidage 30 est légèrement supérieur au diamètre du tube de colonne 11. Les parois latérales 29a, 29b comprennent chacune une ouverture 32 disposée en regard l'une de l'autre et destinée à être traversée par un axe de guidage 33 solidaire d'un élément de la planche de bord (non représenté) ; les dimensions de l'ouverture 32 sont supérieures au diamètre de l'axe de guidage 33 pour permettre un pivotement des parois latérales 29a, 29b autour dudit axe. Ledit axe de guidage 33 est solidaire de mâchoires 25 aptes à enserrer les parois latérales 29a, 29b et il est relié au levier de commande 26. Lors du verrouillage, sur action sur le levier de commande 26, les mâchoires 25 sont aptes à se rapprocher l'une de l'autre et appuyer sur les parois latérales 29a, 29b, ce qui entraine un rapprochement des bords de la coupure longitudinale 31 du tube cylindrique 30 pour diminuer le diamètre intérieur du tube cylindrique de guidage 30.

Le tube de colonne 11 est emboité dans le tube cylindrique de guidage 30 qui entoure de manière préférentielle la partie médiane du tube de colonne.

De manière préférentielle, un élément de butée (non représenté) est disposé sur le tube 11 pour limiter le coulissement du tube de colonne 11 dans le dispositif de blocage 14.

Selon les différents modes de réalisation présentés ci-avant, le tube de colonne 11 est maintenu à la planche de bord par son extrémité basse 16 et par sa partie médiane. Le tube de colonne est attaché par son extrémité basse à un élément de la planche de bord par les bras 19 du dispositif de contrôle 15 et il est adapté à coulisser au travers du tube de guidage 30 apte à pivoter autour de l'axe de guidage 33 du dispositif de blocage 14, lequel est fixé à un élément de la planche de bord.

Le dispositif de contrôle 15 autorise des déplacements de l'extrémité basse 16 du tube de colonne 11 selon une trajectoire comportant un arc de cercle, ce qui entraine le tube de colonne à coulisser au travers du tube cylindrique de guidage 20 et à pivoter autour de l'axe de guidage 33. Les déplacements de l'extrémité haute opposée du tube de colonne 11 à laquelle est fixé le volant de direction sont alors sensiblement symétriques pour le pivotement par rapport à l'axe de guidage 33.

L'objet de l'invention est atteint : le système de réglage autorise des déplacements du volant de direction en hauteur et en profondeur selon une trajectoire déterminée et les moyens de commande sont solidaires de la planche de bord et ne nuisent pas à l'ergonomie du réglage de la colonne. Il est à noter que l'invention n'est pas réduite aux modes de réalisation présentés ci-avant et d'autres modes de réalisations peuvent être suggérées à l'homme du métier pour maitriser les déplacements de l'extrémité basse du tube de colonne selon une trajectoire déterminée par exemple en faisant coulisser les doigts radiaux 21 en extrémité basse du tube de colonne 11 dans une ouverture sensiblement oblongue présentant une forme déterminée comportant un arc de cercle.

## Revendications

1. Système de réglage de colonne de direction (10) de véhicule automobile en hauteur et en profondeur disposé en dessous d'une planche de bord comportant :
- une colonne de direction comportant un tube cylindrique (11) portant à une extrémité haute (13) un volant de direction,
- un dispositif de contrôle (15) du déplacement du tube de la colonne (11) autorisant le déplacement de l'extrémité basse dudit tube selon une trajectoire définie dans un plan,
- un dispositif de blocage (14) en position du tube de colonne,
- un système de guidage (24) du tube de colonne autorisant le coulissement dudit tube (11) selon l'axe longitudinal du tube,
**caractérisé en ce que** le système de guidage (24) est adapté à pivoter autour d'un axe de guidage (33) transversal au plan de la trajectoire et fixé solidaire d'un élément de la planche de bord du véhicule.

2. Système de réglage selon la revendication 1, **caractérisé en ce que** le système de guidage (24) du tube est conformé à entourer le tube de colonne.

3. Système de réglage selon l'une quelconque des revendications 1 ou 2, **caractérisé en ce que** le système de guidage (24) entoure le tube de colonne (11) en sa partie médiane.

4. Système de réglage selon une quelconque des revendications 1 à 3, **caractérisé en ce que** le système de guidage (24) est adapté à être comprimé pour bloquer le tube de colonne (11).

5. Système de réglage selon l'une quelconque des revendications 1 à 4, **caractérisé en ce que** le dispositif de blocage (14) est adapté à bloquer le tube de colonne (11) en rotation autour de l'axe de guidage (33) dans une position angulaire donnée.

6. Système de réglage selon l'une quelconque des revendications 1 à 5, **caractérisé en ce que** le dispositif de contrôle (15) est apte à contrôler le déplacement de l'extrémité inférieure (16) du tube de colonne (11) selon un arc de cercle.

7. Système de réglage selon l'une quelconque des revendications 1 à 6, **caractérisé en ce que** le dispositif de contrôle (15) est relié à un élément de la planche de bord du véhicule par un système de fixation.

8. Système de réglage selon la revendication 7, **caractérisé en ce que** le système de fixation du dispositif de contrôle est adapté à coulisser sur l'élément de la planche de bord selon un axe parallèle à l'axe longitudinal du véhicule.

9. Véhicule automobile comportant une colonne de direction comprenant un système de réglage selon l'une des revendications 1 à 8.

## Patentansprüche

1. System zur Einstellung einer Lenksäule (10) eines Kraftfahrzeugs in der Höhe und in der Tiefe, das unterhalb eines Armaturenbretts angeordnet ist, umfassend:
- eine Lenksäule, die ein zylindrisches Rohr (11) aufweist, das an einem oberen Ende (13) ein Lenkrad trägt,
- eine Vorrichtung zur Steuerung (15) der Verlagerung des Rohres der Säule (11), welche die Verlagerung des unteren Endes des Rohres entlang einer in einer Ebene definierten Trajektorie ermöglicht,
- eine Vorrichtung zur Arretierung (14) des Lenksäulenrohres,
- ein System zur Führung (24) des Lenksäulenrohres, welches das Gleiten des Rohres (11) entlang der Längsachse des Rohres ermöglicht, **dadurch gekennzeichnet, dass** das Führungssystem (24) dafür ausgelegt ist, um eine Führungsachse (33) zu schwenken, die quer zur Ebene der Trajektorie angeordnet ist und fest an einem Element des Armaturenbretts des Fahrzeugs befestigt ist.

2. System zur Einstellung nach Anspruch 1, **dadurch gekennzeichnet, dass** das Führungssystem (24) des Rohres dafür ausgebildet ist, das Lenksäulenrohr zu umgeben.

3. System zur Einstellung nach einem der Ansprüche 1 oder 2, **dadurch gekennzeichnet, dass** das Führungssystem (24) das Lenksäulenrohr (11) in dessen mittlerem Teil umgibt.

4. System zur Einstellung nach einem der Ansprüche 1 bis 3, **dadurch gekennzeichnet, dass** das Führungssystem (24) dafür ausgelegt ist, zusammengedrückt zu werden, um das Lenksäulenrohr (11) festzuklemmen.

5. System zur Einstellung nach einem der Ansprüche 1 bis 4, **dadurch gekennzeichnet, dass** die Arretiervorrichtung (14) dafür ausgelegt ist, das Lenksäulenrohr (11) in einer gegebenen Winkelposition gegen Drehung um die Führungsachse (33) zu arretieren.

6. System zur Einstellung nach einem der Ansprüche 1 bis 5, **dadurch gekennzeichnet, dass** die Steuerungsvorrichtung (15) dafür ausgelegt ist, die Verlagerung des unteren Endes (16) des Lenksäulenrohres (11) entlang eines Kreisbogens zu steuern.

7. System zur Einstellung nach einem der Ansprüche 1 bis 6, **dadurch gekennzeichnet, dass** die Steuerungsvorrichtung (15) durch ein Befestigungssystem mit einem Element des Armaturenbretts des Fahrzeugs verbunden ist.

8. System zur Einstellung nach Anspruch 7, **dadurch gekennzeichnet, dass** das Befestigungssystem der Steuerungsvorrichtung dafür ausgelegt ist, auf dem Element des Armaturenbretts entlang einer Achse zu gleiten, die zur Längsachse des Fahrzeugs parallel ist.

9. Kraftfahrzeug, welches eine Lenksäule aufweist, die ein System zur Einstellung nach einem der Ansprüche 1 bis 8 umfasst.

## Claims

1. System for adjusting a steering column (10) of a motor vehicle in terms of height and depth, said system being arranged below a dashboard and comprising:
- a steering column comprising a cylindrical tube (11) bearing a steering wheel at a top end (13),
- a device (15) for controlling the movement of the tube of the column (11), allowing the movement of the bottom end of said tube along a trajectory defined in a plane,
- a device (14) for blocking the column tube in position,
- a system (24) for guiding the column tube, allowing said tube (11) to slide along the longitudinal axis of the tube,
**characterized in that** the guide system (24) is adapted to pivot about a guide pin (33) which is transverse to the plane of the trajectory and fixed securely to an element of the dashboard of the vehicle.

2. Adjusting system according to Claim 1, **characterized in that** the system (24) for guiding the tube is configured to surround the column tube.

3. Adjusting system according to either one of Claims 1 and 2, **characterized in that** the guide system (24) surrounds the column tube (11) in its mid-part.

4. Adjusting system according to any one of Claims 1 to 3, **characterized in that** the guide system (24) is adapted to be compressed to block the column tube (11).

5. Adjusting system according to any one of Claims 1 to 4, **characterized in that** the blocking device (14) is adapted to block the column tube (11) in rotation about the guide pin (33) in a given angular position.

6. Adjusting system according to any one of Claims 1 to 5, **characterized in that** the control device (15) is able to control the movement of the lower end (16) of the column tube (11) along an arc of a circle.

7. Adjusting system according to any one of Claims 1 to 6, **characterized in that** the control device (15) is connected to an element of the dashboard of the vehicle by a fastening system.

8. Adjusting system according to Claim 7, **characterized in that** the system for fastening the control device is adapted to slide on the element of the dashboard along an axis parallel to the longitudinal axis of the vehicle.

9. Motor vehicle having a steering column comprising an adjusting system according to one of Claims 1 to 8.
